# EUROPÄISCHE PATENTANMELDUNG

(11) **EP 2 924 830 A2**
(43) Veröffentlichungstag der Anmeldung: **30.09.2015**
(21) Anmeldenummer: 15305423.4
(22) Anmeldetag: 24.03.2015
(51) Int. Cl.: H02G 3/14, H02G 3/18

(54) **WANDINTEGRIERTE ANZEIGEVORRICHTUNG**

(30) Priorität: 28.03.2014 DE 102014104383
(71) Anmelder: Berker GmbH & Co. KG, 58579 Schalksmühle (DE)
(72) Erfinder: Diegmann, Rolf-Dieter, 58579 SCHALKSMÜHLE (DE); Abel, Stefan, 58507 LÜDENSCHEID (DE)
(74) Vertreter: Nuss, Laurent

(57) **Zusammenfassung**

Die vorliegende Erfindung betrifft eine integrierte Anzeigevorrichung, wie z. B. Fernseh-, Computer- oder elektronisches Papier-Display, welche an einer Wand montierbar ist, dadurch gekennzeichnet, dass sie aus einer konstruktiven und funktionellen Moduleinheit (2) besteht, die direkt in eine Unterputzdose (3) eingebaut ist und die ein Gehäuse (4) beinhaltet mit einer stirnseitigen Glasplatte (5), in dem der Bildschirmteil (6), die Steuerelektronik (7) und die Versorgungskomponenten untergebracht sind, wobei das Gehäuse (4) teilweise in die Unterputzdose (3) hineinragt und Mittel (9, 10, 11) zur Befestigung des Gehäuses (4) mit der Dose (3) vorgesehen sind.

## Beschreibung

Die vorliegende Erfindung bezieht sich auf Anzeigevorrichtungen und Geräte, die als professionelle oder Freizeit Ausrüstung in Gebäuden, Wohnungen und Häusern vorhanden sind.

Solche Vorrichtungen und Geräte sind üblicherweise als Standausführungen vorhanden und verwendet und werden somit auf Möbel oder desgleichen gestellt und über ein Netzkabel an die Steckdose angeschlossen.

Fernsehgeräte und größere Bildschirmgeräte werden auch direkt an Wänden befestigt, jedoch müssen sie immer noch per Kabel angeschlossen werden, stehen beachtlich und auffallend hervor und lassen sich somit nicht in eine elektrische Installationslinie integrieren.

Weiterhin weist der Stand der Technik verschiedene Installationrahmen auf, die jedoch nur kleine Displays aufnehmen können, die für Bildanzeige und einfache Handbetätigung nicht geeignet sind.

Die Gebrauchsmusterschrift DE 20 2009 018 217 U1 offenbart eine Multifunktionseinheit, die in ein Hausautomatisierungssystem integriert ist und in eine Unterputzdose installierbar ist. Die Multifunktionseinheit umfasst ein berührungsempfindliches Display, das zur Eingabe und Ausgabe von Daten dient.

Die Gebrauchsmusterschrift DE 20 2012 101 320 U1 offenbart eine Vorrichtung, die zur Aufnahme eines elektronischen Gerätes, beispielsweise eines Mobiltelefones, dient, in einer Unterputzdose festlegbar ist und einen Abdeckrahmen umfasst, mittels dem das elektronische Gerät in der Vorrichtung gehalten wird. Der Abdeckrahmen weist eine Öffnung auf, durch welche hindurch ein berührungsempfindliches Display des elektronischen Gerätes einem Benutzer zugänglich ist

Die Druckschrift US 2010/0101854 A1 offenbart eine Steuerungseinrichtung für eine Klimaanlage. Die Steuerungseinrichtung ist in eine in einer Wand eingebrachten Öffnung befestigbar und weist frontseitig ein Berühningsempfindliches Display auf.

Die vorliegende Erfindung hat sich zur Aufgabe gestellt eine Lösung für diese Problematik vorzuschlagen.

Hierzu bezieht sich die Erfindung auf eine integrierte Anzeigevorrichtung, wie z. B. Fernseh-, Computer- oder elektronisches Papier-Display, welche an einer Wand montierbar istund aus einer konstruktiven und funktionellen Moduleinheit besteht, die direkt in eine Unterputzdose eingebaut ist und die ein Gehäuse beinhaltet, in dem der Bildschirmteil, die Steuerelektronik und die Versorgungskomponenten untergebracht sind, wobei das Gehäuse teilweise in die Unterputzdose hineinragt und Mittel zur Befestigung des Gehäuses mit der Dose vorgesehen sind, dadurch gekennzeichnet, dass das Gehäuse eine stirnseitige Glasplatte umfasst.

Bevorzugte Ausgestaltungen der erfindungsgemäßen Anzeigevorrichtung sind Gegenstand der Unteransprüche.

Die Erfindung wird hierunter an Hand von Ausführungsbeispielen und im Zusammenhang mit weiteren Merkmalen näher erläutert, dies im Zusammenhang mit den anliegenden Zeichnungen, worin:
Figur 1 ist eine explosionsartige perspektivistische Darstellung einer ersten Ausführungsform der Erfindung als Fernsehvorrichtung, und,
Figur 2 ist eine explosionsartige perspektivistische Darstellung einer zweiten Ausführungsform der Erfindung als elektronische Displayvorrichtung.

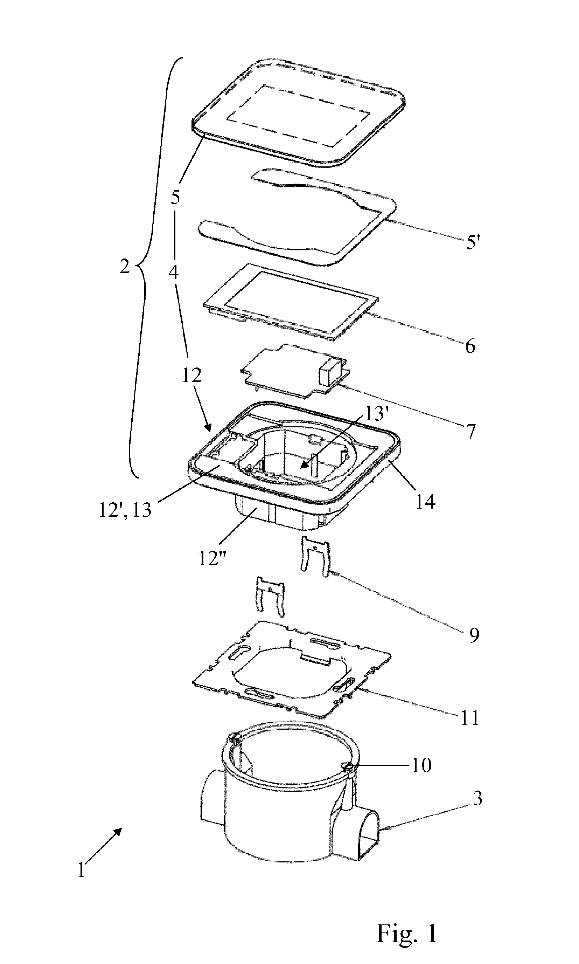

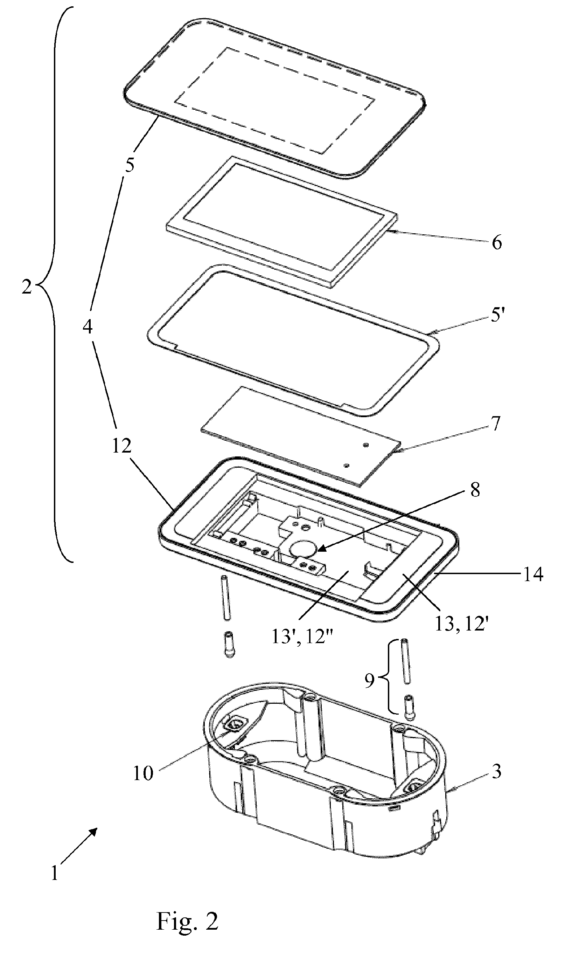

Figuren 1 und 2 zeigen zwei Ausführungsformen einer integrierten interaktiven Anzeigevorrichtung 1.

Diese Vorrichtung besteht, erfindungsgemäß, im wesentlichen aus einer konstruktiven und funktionellen Moduleinheit, die direkt in eine Unterputzdose 3 eingebaut ist. Diese Vorrichtung beinhaltet ein Gehäuse 4 mit einer stirnseitigen Glasplatte 5, in dem der Bildschirmteil 6, die Steuerelektronik 7 und die Versorgungskomponenten 8 untergebracht sind, wobei das Gehäuse 4 teilweise in die Unterputzdose 3 hineinragt und Mittel 9, 10, 11 zur Befestigung des Gehäuses 4 mit der Dose 3 vorgesehen sind.

Somit ist die Anzeigevorrichtung 1 erfindungsgemäß als eine in einer Unterputzdose 3 eingebaute Moduleinheit 2 dargelegt, womit weder ein Aufstellen, noch eine Wandbefestigung mehr erforderlich ist. Ein Anschlußkabel wird nicht benötigt, da die Stromversorgung durch die Wand, direkt von Hinten her in der Dose 3 vorhanden ist.

Die Moduleinheit 2 ist somit sowohl mechanisch als auch elektrisch über die Dose 3 verbunden.

Vorzugsweise, wie dies aus den Figuren 1 und 2 hervorgeht, umfasst das Gehäuse 4 ein schalenartiges Unterteil 12, welches mittels zweier anschließender Schalenteile 12', 12" einen hohlen Raum mit zwei Vertiefungsebenen abgrenzt, wobei eine erste wenig tiefe obere Aussparung 13 die Glasplatte 5 und das Bildschirmteil 6 aufnimmt, und eine zweite tiefere untere zentrale Aussparung 13', welche das Netzteil, die Strom-und/oder Signalversorgungskomponenten 8 und die voluminösen elektronischen Bestandteile aufnimmt.

Gemäß einem Merkmal der Erfindung, kann das Schalenteil 12', welches die erste obere Aussparung 13 teilweise definiert, durch eine anschließende Randwandung 14 nach Außen hin abgegrenzt sein.

Um Bildschirmteile 6, die größer als die Dose 3 sind, aufnehmen zu können, kann erfindungsgemäß vorgesehen werden, dass die erste obere Aussparung 13 ein (flaches) Vierkantprisma ausmacht und sich über den lateralen Umfang der Unterputzdose 3 hinaus erstreckt.

Die Glasplatte 5 kann durch ein ringsumgebendes Klebepad 5' mit dem ersten Schalenteil 12' verbunden sein.

Um ein einheitliches Aussehen für verschiedene Typen von Vorrichtungen 1 zu erreichen, und auch diese in eine elektrische Produktlinie einblenden zu können (Schaltern, Steckdosen, ...), kann das erste Schalenteil 12', das die erste obere Aussparung 13 ausmacht, und umfangsseitig durch die Randwandung 14 begrenzt ist, dazu vorgesehen sein, gegenüber der Unterputzdose 3 und/oder der Wandoberfläche über die Randhöhe vorzustehen.

Um eine feste mechanische Verbindung herzustellen und gleichzeitig ein maximales nützliches Volumen im unteren Schalenteil 12" zur Hand zu haben, kann die äußere Form des Schalenteiles 12", das die zweite zentrale tiefere Aussparung 13' ausmacht, der inneren Form der Unterputzdose 3 angepasst sein.

Gemäß einer ersten konstruktiven Ausführungsform, ist die Unterputzdose 3 eine runde Einzeldose, und das schalenartige Unterteil 12 ist mittels Klemmfedern 9 mit einer an der Dose 3 befestigten Tragplatte 11 lösbar verbunden (Fig. 1).

Gemäß einer zweiten konstruktive Ausführungsform, ist die Unterputzdose 3 eine langlochförmliche Doppeldose. Das schalenartige Unterteil 12 kann lösbare Befestigungsmittel 9 mit der Dose 3 beinhalten, wie z. B. Rast- oder Einsteckbefestigungsmittel, die mit entsprechend ergänzenden Verankerungsmittel 10 zusammenwirken zwecks lösbarer Verriegelung der integrierten Montage der Moduleinheit 2 in der Unterputzdose 3 (Fig. 2).

Die Befestigungsmittel 9 und 10 können in diesem Fall z. B. so ausgeführt sein wie in DE 10 2006 045 806 B3 offenbart.

Die Vorrichtung 1 kann als interaktive, wie zum Beispiel eine bildschirmsensitive, eine ferngesteuerte oder eine busliniengesteuerte Vorrichtung, dargelegt sein.

## Patentansprüche

1. Integrierte Anzeigevorrichtung" welche an einer Wand montierbar istund aus einer konstruktiven und funktionellen Moduleinheit (2) besteht, die direkt in eine Unterputzdose (3) eingebaut ist und die ein Gehäuse (4) beinhaltet, in dem der Bildschirmteil (6), die Steuerelektronik (7) und die Versorgungskomponenten (8) untergebracht sind, wobei das Gehäuse (4) teilweise in die Unterputzdose (3) hineinragt und Mittel (9, 10, 11) zur Befestigung des Gehäuses (4) mit der Dose (3) vorgesehen sind, **dadurch gekennzeichnet, dass** das Gehäuse (4) eine stirnseitige Glasplatte (5) umfasst.

2. Integrierte Anzeigevorrichtung gemäß Anspruch 1, **dadurch gekennzeichnet, dass** das Gehäuse (4) ein schalenartiges Unterteil (12) umfasst, welches mittels zweier anschließender Schalenteile (12', 12"), und zwar einem ersten Schalenteil (12') und einem unteren Schalenteil (12"), einen hohlen Raum mit zwei Vertiefungsebenen abgrenzt, wobei eine erste wenig tiefe obere Aussparung (13) die Glasplatte (5) und das Bildschirmteil (6) aufnimmt, und eine zweite tiefere untere zentrale Aussparung (13'), welche das Netzteil, die Strom- und/oder Signalversorgungskomponenten (8) und die voluminösen elektronischen Bestandteile aufnimmt.

3. Integrierte Anzeigevorrichtung gemäß Anspruch 2, **dadurch gekennzeichnet, dass** das erste Schalenteil (12'), welches die erste obere Aussparung (13) teilweise definiert, durch eine anschließende Randwandung (14) nach Außen hin abgegrenzt ist.

4. Integrierte Anzeigevorrichung gemäß Anspruch 2 oder 3, **dadurch gekennzeichnet, dass** die erste obere Aussparung (13) ein ungefähr parallelepipedisches Volumen ausmacht und sich über den lateralen Umfang der Unterputzdose (3) peripheral hinaus erstreckt.

5. Integrierte Anzeigevorrichtung gemäß einem der Ansprüche 3 bis 4, **dadurch gekennzeichnet, dass** das erste Schalenteil (12') das die erste obere Aussparung (13) ausmacht, und umfangsseitig durch die Randwandung (14) begrenzt ist, dazu vorgesehen ist, gegenüber der Unterputzdose (3) und/oder der Wandoberfläche über die Randhöhe vorzustehen.

6. Integrierte Anzeigevorrichtung gemäß einem der Ansprüche 2 bis 5, **dadurch gekennzeichnet, dass** die äußere Form des unteren Schalenteiles (12"), das die zweite zentrale tiefere Aussparung (13') ausmacht, der inneren Form der Unterputzdose (3) angepasst ist.

7. Integrierte Anzeigevorrichtung gemäß einem der Ansprüche 1 bis 6, **dadurch gekennzeichnet, dass** die Unterputzdose (3) eine runde Einzeldose ist, und dass das schalenartige Unterteil (12) mittels Klammfedern (9) mit einer an der Dose (3) befestigten Tragplatte (11) lösbar verbunden ist.

8. Integrierte Anzeigevorrichtung gemäß einem der Ansprüche 1 bis 6, **dadurch gekennzeichnet, dass** die Unterputzdose (3) eine langlochförmliche Doppeldose ist, und dass das schalenartige Unterteil (12) lösbare Befestigungsmittel (9) mit der Dose (3) beinhaltet, die mit entsprechend ergänzenden Verankerungsmittel (10) zusammenwirken zwecks lösbarer Verriegelung der integrierten Montage der Moduleinheit (2) in der Unterputzdose (3).

9. Integrierte Anzeigevorrichtung gemäß Anspruch 8, **dadurch gekennzeichnet, dass** die lösbaren Befestigungsmittel (9), die zwecks lösbarer Verriegelung der integrierten Montage der Moduleinheit (2) in der Unterputzdose (3) mit entsprechend ergänzenden Verankerungsmittel (10) zusammenwirken, Rast- oder Einsteckbefestigungsmittel sind.

10. Integrierte Anzeigevorrichtung gemäß einem der Ansprüche 1 bis 9, **dadurch gekennzeichnet, dass** sie als interaktive, wie zum Beispiel eine bildschirmsensitive, eine ferngesteuerte oder eine busliniengesteuerte Vorrichtung, dargelegt ist.

11. Integrierte Anzeigevorrichtung gemäß einem der Ansprüche 1 bis 10, **dadurch gekennzeichnet, dass** die Anzeigevorrichtung ein Fernsehdisplay, ein Computerdisplay oder ein elektronisches Papier-Display ist.
